# EUROPEAN PATENT APPLICATION

(11) **EP 4 831 677 A2**
(43) Date of publication of application: **28.10.2026**
(21) Application number: 26168782.6
(22) Date of filing: 27.03.2026
(51) Int. Cl.: G01S 5/02, G01S 5/12, G01S 13/76, G01S 13/82

(54) **LOCALIZATION SYSTEM AND LOCALIZATION METHOD FOR LOCALIZING A WIRELESS COMMUNICATION DEVICE**

(30) Priority: 01.04.2025 US 202563781452 P; 16.09.2025 US 202563882441 P; 25.03.2026 US 202619577717
(71) Applicant: Nextpert Inc., New Taipei, Taiwan (TW)
(72) Inventor: KUO, WEN-YI, 23679 New Taipei (TW); YEH, CHENG-FENG, 23679 New Taipei (TW); WANG, WEI-CHUNG, 23679 New Taipei (TW); CHANG, KENG-PIN, 23679 New Taipei (TW); CHANG, CHUNG-YUAN, 23679 New Taipei (TW)
(74) Representative: Metida

(57) **Abstract**

A localization system and a localization method for localizing a wireless communication device of a vehicle, including at least two anchors respectively arranged in different positions of the vehicle, each of the at least two anchors includes a plurality of directional antennas arranged in a predetermined polygonal configuration, the plurality of directional antennas of the at least two anchors are configured to radiate and receive electromagnetic signals over 360 degrees and localize the wireless communication device of the vehicle; at least one directional antenna of the plurality of directional antennas are configured to detect a distance between the directional antenna and the wireless communication device; and a processor configured to calculate a position of the wireless communication device based on the distance between the directional antenna and the wireless communication device.

## Description

### FIELD

The subject matter herein generally relates to a field of vehicle digital key technology, particularly to a localization system and a localization method for localizing a wireless communication device of a vehicle by directional smart antenna array.

### BACKGROUND

Conventional digital key systems primarily rely on multi-anchor (for example, more than five) schemes for localization. However, such technologies present several limitations, including high hardware costs. Traditional approaches typically require the deployment of five to six anchors. A common layout is the "4+1" configuration (four corner anchors plus one central anchor), with each anchor utilizing omnidirectional antennas. This significantly increases manufacturing, installation, and maintenance costs, thereby limiting adoption to high-end vehicle models and resulting in low market penetration for mid-tier and low-tier models.

### SUMMARY OF THE INVENTION

The application provides a localization system and a localization method for localizing a wireless communication device.

The invention is set out in the appended set of claims.

The localization system for localizing a wireless communication device of a vehicle apply predetermined number of anchors to reduce the overall system cost, meanwhile improving system reliability for localizing the wireless communication device of the vehicle and is expected to be applied to different vehicles.

### BRIEF DESCRIPTION OF THE DRAWINGS

Implementations of the present disclosure will now be described, by way of embodiments, with reference to the attached figures.
FIG. 1 is a schematic diagram of a conventional method for localizing digital keys.
FIG. 2 is a block diagram of a localization system for localizing a wireless communication device according to an embodiment of the present application.
FIG. 3 is a schematic diagram of placement configuration 1 of two anchors in a vehicle provided in an embodiment of the present application.
FIG. 4A is a schematic diagram of placement configuration 2 of two anchors in the vehicle provided in another embodiment of the present application.
FIG. 4B is a schematic diagram of placement configuration 3 of two anchors in the vehicle provided in another embodiment of the present application.
FIG. 5A is a structural schematic diagram of a directional antenna array using three directional antennas arranged in a triangular configuration provided by an embodiment of the present application.
FIG. 5B illustrates schematic diagrams of directional radiation patterns according to the directional antenna array arranged in the triangular configuration as shown in FIG. 5A.
FIG. 5C is a schematic diagram of a combined radiation pattern of the directional antenna array including transmitting antennas (Tx) or receiving antennas (Rx) according to FIG. 5B.
FIG. 6A is a structural schematic diagram of a directional antenna array using two directional antennas arranged in a quadrilateral configuration provided by an embodiment of the present application.
FIG. 6B illustrates schematic diagrams of directional radiation patterns according to the directional antenna array arranged in the quadrilateral configuration as shown in FIG. 6A.
FIG. 6C is a schematic diagram of a combined radiation pattern of the directional antenna array including transmitting antennas (Tx) or receiving antennas (Rx) according to FIG. 6B.
FIG. 7A is a structural schematic diagram of a directional antenna array using four directional antennas arranged in a quadrilateral configuration provided by an embodiment of the present application.
FIG. 7B illustrates schematic diagrams of directional radiation patterns according to the directional antenna array arranged in the quadrilateral configuration as shown in FIG. 7A.
FIG. 7C is a schematic diagram of a combined radiation pattern of the directional antenna array including transmitting antennas (Tx) or receiving antennas (Rx) according to FIG. 7B.
FIG. 8A is a structural schematic diagram of a directional antenna array using three directional antennas arranged in a hexagonal configuration offset from one another by a side of a hexagon provided by an embodiment of the present application.
FIG. 8B illustrates schematic diagrams of directional radiation patterns according to the directional antenna array arranged in the hexagonal configuration as shown in FIG. 8A.
FIG. 8C is a schematic diagram of a combined radiation pattern of the directional antenna array including transmitting antennas (Tx) or receiving antennas (Rx) according to FIG. 8B.
FIG. 9A is a structural schematic diagram of a directional antenna array using six directional antennas arranged in a hexagonal configuration provided by an embodiment of the present application.
FIG. 9B illustrates schematic diagrams of directional radiation patterns according to the directional antenna array arranged in the hexagonal configuration as shown in FIG. 9A.
FIG. 9C is a schematic diagram of a combined radiation pattern of the directional antenna array including transmitting antennas (Tx) or receiving antennas (Rx) according to FIG. 9B.
FIG. 9D is a schematic diagram of the localization system expanding for radar functions in the present application.
FIG. 10 is a flowchart of a localization method for localizing a wireless communication device provided by an embodiment of the present application.
FIG. 11 is a schematic diagram of the localization system for determining coordinates of the wireless communication device according to an embodiment of the present application.
FIG. 12 is a schematic diagram of the localization system for estimating time of flight of signal between a Device A and a Device B according to an embodiment of the present application.
FIGS. 13A, 13B, and 13C are schematic diagrams of the localization system for determining a position of the wireless communication device according to an embodiment of the present application.
FIG. 14 is a block diagram of a localization system for localizing a wireless communication device according to another embodiment of the present application.
FIG. 15 is a block diagram of a localization system for localizing a wireless communication device according to another embodiment of the present application.
FIGS. 16, 17, and 18 are structural schematic diagrams of arrangements of directional antenna arrays of the localization system provided by some embodiments of the present application.
FIG. 19 is a structural schematic diagram of the directional antenna arrays in the anchor provided by an embodiment of the present application.
FIG. 20 illustrates schematic diagrams of directional radiation patterns according to the directional antenna arrays as shown in FIG. 19.
FIG. 21 is a schematic diagram of a combined radiation pattern of the directional antenna arrays including transmitting antennas (Tx) or receiving antennas (Rx) according to FIG. 20.

### DETAILED DESCRIPTION

It will be appreciated that for simplicity and clarity of illustration, where appropriate, reference numerals have been repeated among the different figures to indicate corresponding or analogous elements. Additionally, numerous specific details are set forth in order to provide a thorough understanding of the embodiments described herein. However, it will be understood by those of ordinary skill in the art that the embodiments described herein can be practiced without these specific details. In other instances, methods, procedures and components have not been described in detail so as not to obscure the related feature being described. The drawings are not necessarily to scale and the proportions of certain parts may be exaggerated to better illustrate details and features. The description is not to be considered as limiting the scope of the embodiments described herein.

Several definitions that apply throughout this disclosure will now be presented.

The term "coupled" is defined as connected, whether directly or indirectly through intervening components, and is not necessarily limited to physical connections. The connection can be such that the objects are permanently connected or releasably connected. The term "substantially" is defined to be essentially conforming to the particular dimension, shape, or another word that "substantially" modifies, such that the component need not be exact. For example, "substantially cylindrical" means that the object resembles a cylinder, but can have one or more deviations from a true cylinder. The term "comprising" means "including, but not necessarily limited to"; it specifically indicates open-ended inclusion or membership in a so-described combination, group, series, and the like.

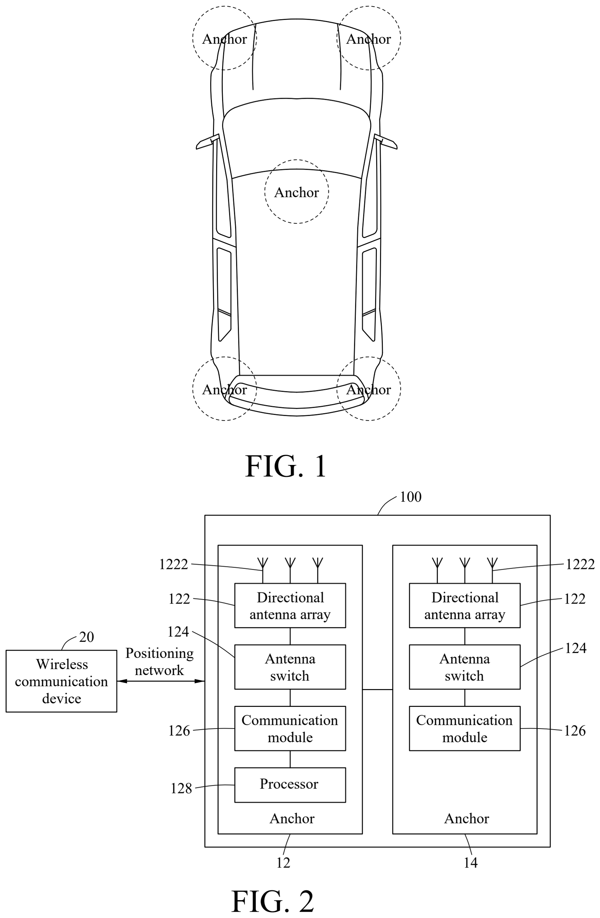

FIG. 1 illustrates a conventional method for positioning digital keys. As shown in FIG. 1, four corner anchors and one central anchor, each may be equipped with an omnidirectional antenna. However, the conventional method has multiple disadvantages, such as limited positioning accuracy and low signal processing efficiency. Traditional ranging techniques are significantly affected by multipath effects and signal obstructions, resulting in increased ranging errors. This degrades the accuracy and stability of the vehicle digital key system. Existing systems lack optimized methods for antenna directionality and angle estimation, which adversely impacts the efficiency and computational accuracy of the positioning algorithms.

To address the aforementioned issues, the present application proposes a digital key anchoring system based on directional antenna technology. Through the following technical innovations, the performance and market adaptability of digital key systems are significantly enhanced, which has at least the following advantages: reduced number of anchors, improved positioning technology, and enhanced signal processing efficiency. By adopting smart antenna technology, the proposed system optimizes the conventional 5-6 anchor configuration to just 1-2 anchors. This substantially reduces hardware costs and wiring complexity, while improving manufacturing and installation efficiency. The system integrates directional antennas with Time-of-Flight (ToF) ranging techniques to enhance the positioning capability of each anchor. This compensates for potential errors caused by fewer anchors and ensures high-precision localization. By optimizing antenna array signal processing techniques, the system improves the accuracy of angle measurements and mitigates the effects of multipath interference, thereby strengthening the overall reliability of the digital key system.

The present application not only overcomes the limitations of conventional technologies in terms of hardware cost, positioning accuracy, and algorithmic efficiency, but also enhances the feasibility of digital key solutions for mid-tier and low-tier vehicle models. This is expected to broaden the application scope of digital key technology and promote wider market adoption.

The present application provides a localization system based on a multi-antenna array and Time-of-Flight (ToF) ranging technology. By utilizing time-based calculations of wireless signals in conjunction with a multi-antenna direction-finding mechanism, the system ensures accurate localization between wireless communication devices and the anchoring system.

FIG. 2 illustrates a block diagram of a localization system 100 for localizing a wireless communication device of a vehicle according to an embodiment of the present application. Especially, the proposed block diagram is designed for in-vehicle applications.

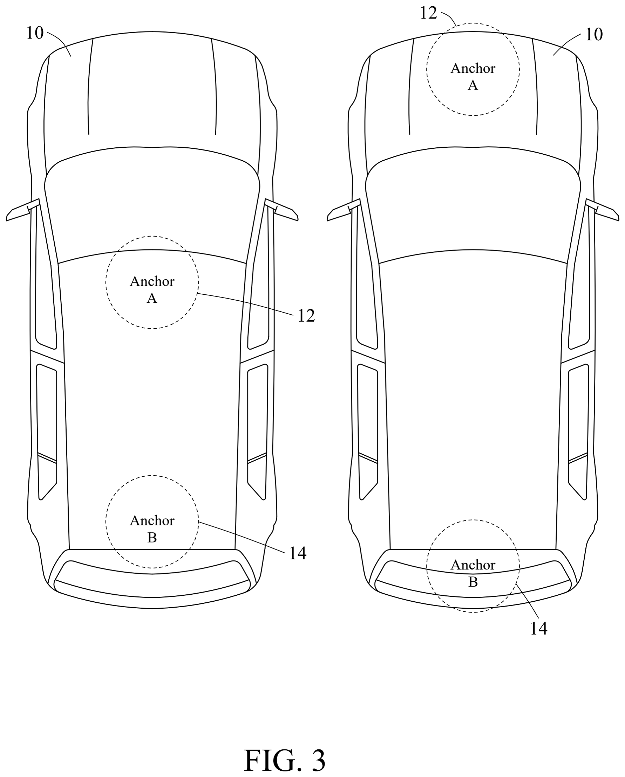

Referring to FIGS. 2 and 3, the localization system 100 can be arranged in a vehicle 10 and communicated with at least one wireless communication device 20. The vehicle 10 and the wireless communication device 20 can wirelessly communicate with each other through a positioning network. In at least one embodiment, the wireless communication device 20 can be a digital key for the vehicle 10, which can start and stop the engine of the vehicle 10, lock and unlock the doors of the vehicle 10, and functions of proximity detection. The position network can be different wireless communication technologies, such as Ultra-Wideband (UWB) technology, which is not limited to this. In at least one embodiment, the digital key and the vehicle 10 have a match communication range, the digital key can be matched to the vehicle 10, when the digital key is within the match communication range, the vehicle 10 can identify the digital key, where the match communication range of the digital key and the vehicle 10 can be operated by BLE (Bluetooth low energy) technology.

The localization system 100 includes at least two anchors. The at least two anchors may be disposed at different positions of the vehicle 10. For example, one may be arranged in a front area of the vehicle 10, and one may be arranged in a rear area of the vehicle 10. In at least one embodiment, the localization system 100 includes a first anchor 12 and a second anchor 14. It should be noted that, the number of anchors can be from 1 to **I,** where I is a positive integer. The block diagram illustrates one example of two anchors positioned in the vehicle 10 in this application. Each of the first anchor 12 and the second anchor 14 includes a directional antenna array 122, an antenna switch 124, and a communication module 126. For one of the first anchor 12 and the second anchor 14, further including a processor 128, which is not limited to this. In another embodiment, neither the first anchor 12 nor the second anchor 14 includes the processor 128, both the first anchor 12 and the second anchor 14 can communicate with a processor (such as a Microcontroller unit, MCU) arranged in the vehicle 10.

In at least one embodiment, the directional antenna array 122 includes at least two directional antennas 1222, configured to directionally transmit and receive wireless signals. In at least one embodiment, the directional antenna array 122 shown in FIG. 2 can include the number of directional antennas ranging from 2 to M, where M is a positive integer greater than 2. In the embodiment, FIG. 2 illustrates three directional antennas positioned in each anchor.

In the embodiments, the application employs the directional antenna array 122 composed of multiple directional antennas 1222. The directional antenna array 122, cooperating with the antenna switch 124, is capable of rapid switching and operation within extremely short time intervals, thereby achieving a radiation pattern distribution similar to that of an omnidirectional antenna. By leveraging the directional characteristics of the antennas, the localization system 100 can effectively identify ghosting effects in the Time-of-Flight (ToF) ranging process, enabling precise determination of the wireless communication device's actual position. This approach significantly reduces the number of required anchors.

The communication module 126 is configured to communicate with other anchor(s) and the wireless communication device 20. In at least one embodiment, the communication module 126 can be, but is not limited to an Ultra-Wideband (UWB) module, which can operate in a positioning network, such as Ultra-Wideband (UWB) network. The processor 128 is configured to control the UWB module 126, the antenna switch 124, and the directional antenna array 122, and process the data and information of the directional antenna array 122. In at least one embodiment, the data and information of both the first anchor 12 and the second anchor 14 can be transmitted to the processor 128 arranged in one of the first anchor 12 and the second anchor 14 or the processor 128 arranged in the vehicle 10 for processing.

The present application can be applied to various wireless communication technologies for use as a positioning network. For example, in one embodiment, Ultra-Wideband (UWB) is utilized, specifically in channels CH5, CH6, CH8, CH9, CH10, and CH12, covering a frequency range of 6.5-9.0 GHz. The present application is also compatible with other communication protocols such as Bluetooth Low Energy (BLE) operating at 2.4 GHz, and Wi-Fi operating at 2.4 GHz, 5 GHz, and 6 GHz. However, it is not limited to these communication standards.

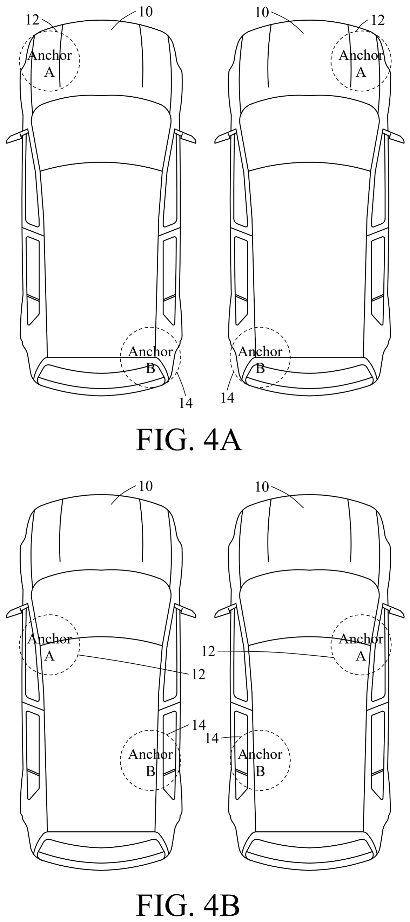

In at least one embodiment, two anchors 12, 14 (which can also refer to anchor A and anchor B) are deployed (I=2). The following illustrates possible placement configurations: configuration 1 as shown in FIG. 3, configuration 2 as shown in FIG. 4A, and configuration 3 as shown in FIG. 4B. As shown in FIG. 3, two anchors (I=2) are symmetrically positioned along a center axis of the vehicle 10, placed in a front-to-rear opposing arrangement. As shown in FIG. 4A, two anchors (I=2) are positioned at corners of the vehicle 10, specifically mounted on bumper areas of the vehicle 10. As shown in FIG. 4B, two anchors (I=2) are positioned at corners of the vehicle 10, specifically mounted on passenger's room of the vehicle 10.

In at least one embodiment, the present application utilizes a directional anchoring system in which directional antennas 1222 are arranged in a predetermined polygonal configuration. The number of polygonal sides of the predetermined polygonal configuration ranges from 3 to N (where N is a positive integer greater than 3), and the number of directional antennas ranges from 2 to M (where M is also a positive integer greater than 2). Each directional antenna is capable of functioning as both a transmitter (Tx) and a receiver (Rx). By rapidly switching between directional antennas within extremely short time intervals (e.g., 96 milliseconds or shorter), the localization system 100 achieves a radiation pattern that effectively emulates an omnidirectional antenna.

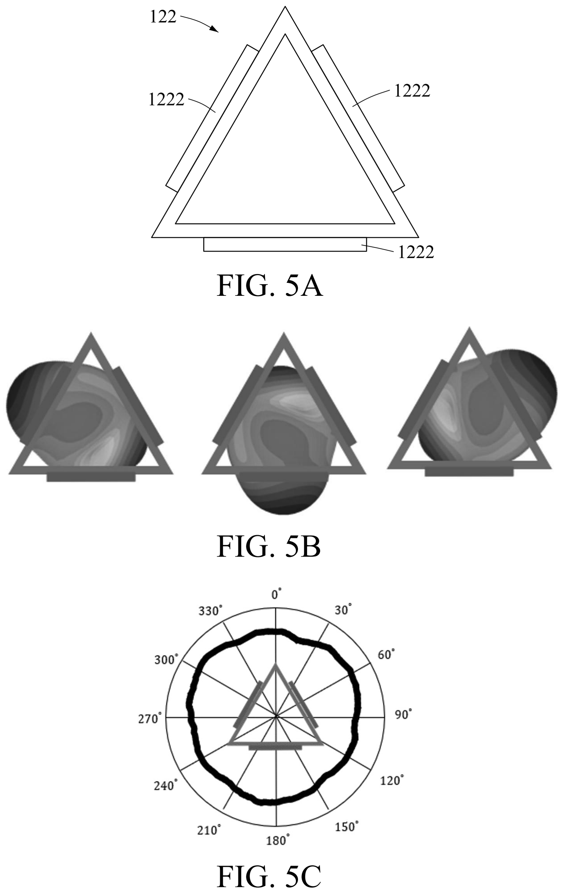

Embodiments illustrate the anchors having different types of the directional antenna array 122 arrangement and corresponding radiation patterns. For example, FIGS. 5A-5C illustrate a triangular configuration utilizing three directional antennas 122, that is, N=3, M=3.

FIG. 5A illustrates an embodiment of the directional antenna array using 3 directional antennas (M=3) arranged in a triangular (N=3) configuration.

FIG. 5B illustrates an embodiment of directional radiation pattern according to the directional antenna array arranged in a triangular configuration as shown in FIG. 5A, in which each directional antenna of the directional antenna array has transmitting radiation (Tx) and receiving radiation (Rx) functions. During the radiation period, each directional antenna of the directional antenna array will alternately do transmitting radiation (Tx) and receiving radiation (Rx) to generate a specific directional radiation pattern as shown in FIG. 5B.

FIG. 5C illustrates an embodiment of a combined radiation pattern of the directional antenna array including transmitting antennas (Tx) or receiving antennas (Rx) according to FIG. 5B, in which, each directional antenna of the directional antenna array (Rx or Tx) is quickly switched at an extremely short time interval (such as 96 milliseconds or shorter), so that each directional antenna pattern in the original directional antenna array forms an effect similar to an omnidirectional antenna array by quickly switching at an extremely short time interval. FIG. 5C can be a combined radiation pattern of a transmitting antenna array (Tx) or a receiving antenna array (Rx).

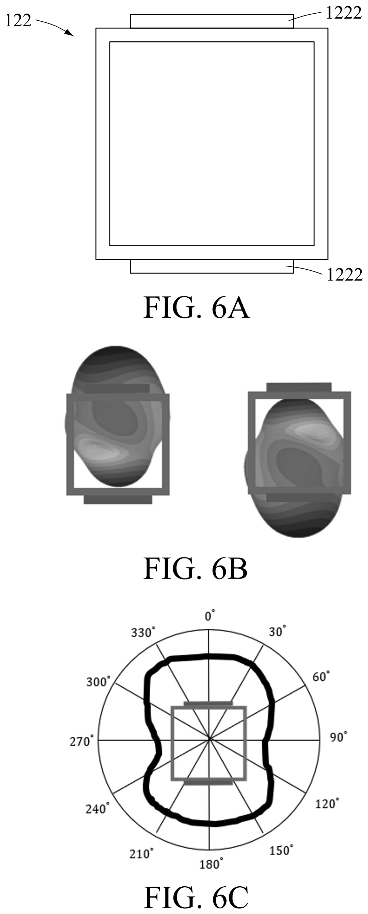

For another example, FIGS. 6A-6C illustrate a quadrilateral configuration utilizing two directional antennas 122, that is, N=4, M=2.

FIG. 6A illustrates an embodiment of the directional antenna array using 2 directional antennas (M=2) arranged in a quadrilateral (N=4) configuration.

FIG. 6B illustrates an embodiment of directional radiation pattern according to the directional antenna array using 2 directional antennas arranged in the quadrilateral configuration as shown in FIG. 6A, in which each directional antenna of the directional antenna array has transmitting radiation (Tx) and receiving radiation (Rx) functions. During the radiation period, each directional antenna of the directional antenna array will alternately do transmitting radiation (Tx) and receiving radiation (Rx) to generate a specific directional radiation pattern as shown in FIG. 6B.

FIG. 6C illustrates an embodiment of a combined radiation pattern of the directional antenna array including transmitting antennas (Tx) or receiving antennas (Rx) according to FIG. 6B. In which, each directional antenna of the directional antenna array (Rx or Tx) is quickly switched at an extremely short time interval (such as 96 milliseconds or shorter), so that each directional antenna pattern in the original directional antenna array forms an effect similar to an omnidirectional antenna array by quickly switching at an extremely short time interval. FIG. 6C can be a combined radiation pattern of a transmitting antenna array (Tx) or a receiving antenna array (Rx).

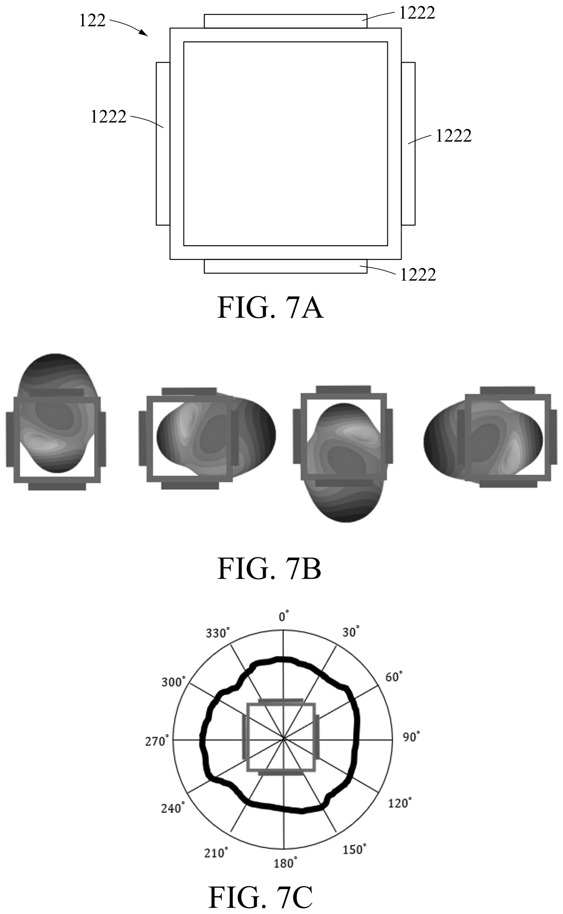

For another example, FIGS. 7A-7C illustrate a quadrilateral configuration utilizing four directional antennas 122, that is, N=4, M=4.

FIG. 7A illustrates an embodiment of the directional antenna array using 4 directional antennas (M=4) arranged in a quadrilateral (N=4) configuration.

FIG. 7B illustrates an embodiment of directional radiation pattern according to the directional antenna array using 4 directional antennas arranged in a quadrilateral configuration as shown in FIG. 7A, in which each directional antenna of the directional antenna array has transmitting radiation (Tx) and receiving radiation (Rx) functions. During the radiation period, each directional antenna of the directional antenna array will alternately do transmitting radiation (Tx) and receiving radiation (Rx) to generate a specific directional radiation pattern as shown in FIG. 7B.

FIG. 7C illustrates an embodiment of a combined radiation pattern of the directional antenna array including transmitting antennas (Tx) or receiving antennas (Rx) according to FIG. 7B. In which, each directional antenna of the directional antenna array (Rx or Tx) is quickly switched at an extremely short time interval (such as 96 milliseconds or shorter), so that each directional antenna pattern in the original directional antenna array forms an effect similar to an omnidirectional antenna array by quickly switching at an extremely short time interval. FIG. 7C can be a combined radiation pattern of a transmitting antenna array (Tx) or a receiving antenna array (Rx).

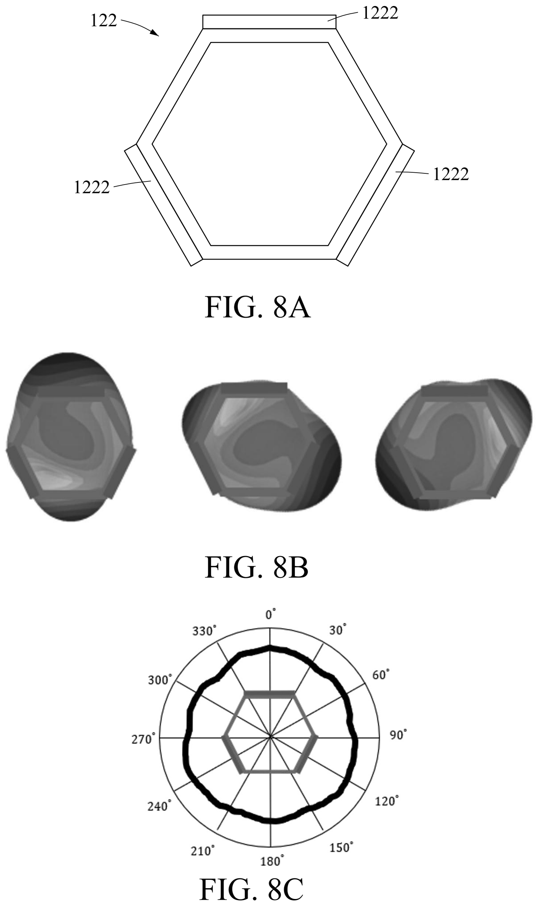

For another example, FIGS. 8A-8C illustrate a hexagonal configuration utilizing three directional antennas 122, that is, N=6, M=3.

FIG. 8A illustrates an embodiment of the directional antenna array using 3 directional antennas (M=3) arranged in a hexagonal (N=6) configuration offset from one another by a side of a hexagon.

FIG. 8B illustrates an embodiment of directional radiation pattern according to the directional antenna array using 3 directional antennas arranged in a hexagonal configuration as shown in FIG. 8A, in which each directional antenna of the directional antenna array has transmitting radiation (Tx) and receiving radiation (Rx) functions. During the radiation period, each directional antenna of the directional antenna array will alternately do transmitting radiation (Tx) and receiving radiation (Rx) to generate a specific directional radiation pattern as shown in FIG. 8B.

FIG. 8C illustrates an embodiment of a combined radiation pattern of the directional antenna array including transmitting antennas (Tx) or receiving antennas (Rx) according to FIG. 8B. In which, each directional antenna of the directional antenna array (Rx or Tx) is quickly switched at an extremely short time interval (such as 96 milliseconds or shorter), so that each directional antenna pattern in the original directional antenna array forms an effect similar to an omnidirectional antenna array by quickly switching at an extremely short time interval. FIG. 8C can be a combined radiation pattern of a transmitting antenna array (Tx) or a receiving antenna array (Rx).

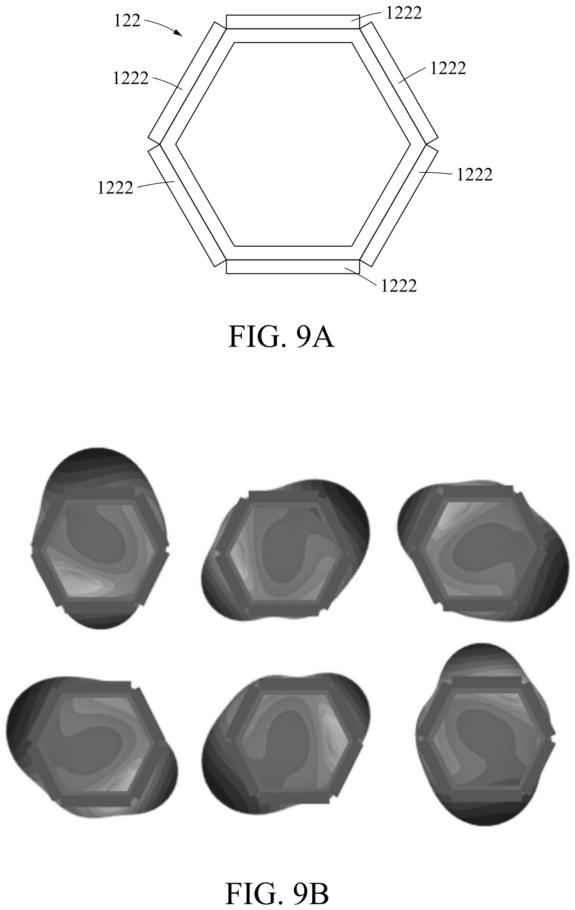

For another example, FIGS. 9A-9C illustrate a hexagonal configuration utilizing six directional antennas 122, that is, N=6, M=6.

FIG. 9A illustrates an embodiment of the directional antenna array using 6 directional antennas (M=6) arranged in a hexagonal (N=6) configuration.

FIG. 9B illustrates an embodiment of directional radiation pattern according to the directional antenna array using 6 directional antennas arranged in a hexagonal configuration as shown in FIG. 9A, in which each directional antenna of the directional antenna array has transmitting radiation (Tx) and receiving radiation (Rx) functions. During the radiation period, each directional antenna of the directional antenna array will alternately do transmitting radiation (Tx) and receiving radiation (Rx) to generate a specific directional radiation pattern as shown in FIG. 9B.

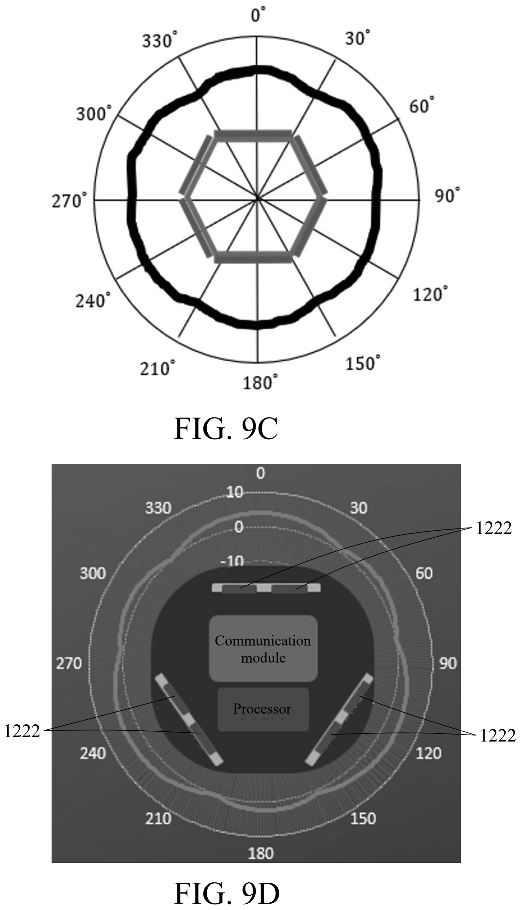

FIG. 9C illustrates an embodiment of a combined radiation pattern of the directional antenna array including transmitting antennas (Tx) or receiving antennas (Rx) according to FIG. 9B. In which, each directional antenna of the directional antenna array (Rx or Tx) is quickly switched at an extremely short time interval (such as 96 milliseconds or shorter), so that each directional antenna pattern in the original directional antenna array forms an effect similar to an omnidirectional antenna array by quickly switching at an extremely short time interval. FIG. 9C can be a combined radiation pattern of a transmitting antenna array (Tx) or a receiving antenna array (Rx).

From the above, it can be observed that as the number of the directional antennas increases, the resulting radiation pattern becomes more circular and the coverage becomes more complete.

In addition to being applied for positioning functions, the present application also retains the expandability for radar functions in this application as shown in FIG. 9D. Two directional antennas can be configured at each side of the polygon, it can enable various applications such as CPD (Child Presence Detection) or tailgate kick detection for activation.

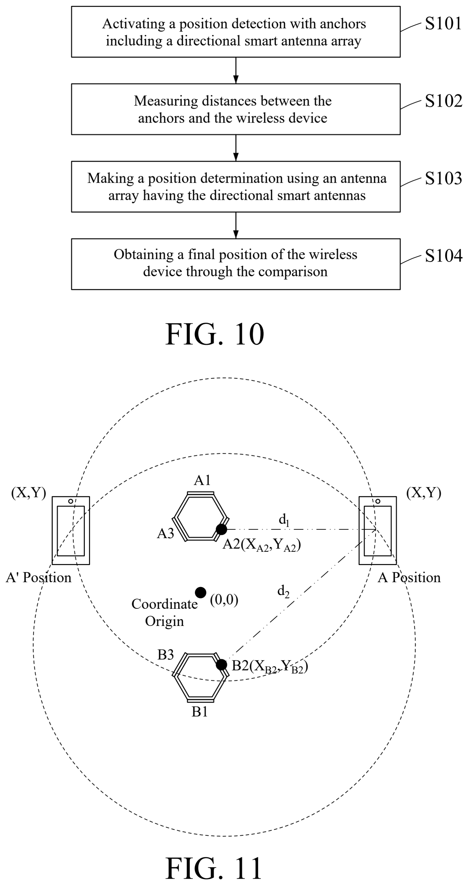

FIG. 10 illustrates a flowchart of a localization method for localizing a wireless communication device. The method can be operated in the localization system 100 as shown in FIG. 2, and the localization method may include:

At block S101, the localization method includes activating a position detection with anchors including a directional antenna array.

In one embodiment, some anchors 12, 14 are installed in the vehicle 10 as shown in FIG. 2. Each of the two anchors 12, 14 includes three directional antennas 1222 in a hexagonal configuration offset from one another by a side of a hexagon.

In the block S101, a directional antenna array includes three directional antennas (M=3) arranged in a hexagonal configuration (N=6). The directional antenna array activates each directional antenna of the directional antenna array to detect a wireless communication device near the vehicle via a positioning network. For example, the positioning network can be the Ultra-Wideband (UWB), specifically in channels CH5, CH6, CH8, CH9, CH10, and CH12, covering a frequency range of 6.5-9.0 GHz. The application is also compatible with other communication protocols such as Bluetooth Low Energy (BLE) operating at 2.4 GHz, and Wi-Fi operating at 2.4 GHz, 5 GHz, and 6 GHz. However, it is not limited to these communication standards.

In at least one embodiment, two directional antennas (such as A1, A2 as shown in FIG. 11) of the directional antenna array of each anchor can be activated for signal transmitting and receiving, the other two directional antennas (such as A2, A3 as shown in FIG. 11) of the directional antenna array of each anchor can be switched on at an extremely short time interval (such as 96 milliseconds or shorter), and then other two directional antennas (such as A3, A1 as shown in FIG. 11) of the directional antenna array of each anchor can be switched on at an extremely short time interval (such as 96 milliseconds or shorter), so that each directional antenna pattern in the directional antenna array forms an effect similar to an omnidirectional antenna array by quickly switching at an extremely short time interval.

At block S102, the localization method includes measuring distances between the anchors and the wireless communication device.

In at least one embodiment, the Time-of-Flight (ToF) technique can be used to calculate the distances between the wireless communication device and the anchors based on the time it takes for the signal to propagate through space.

From the two anchors 12, 14, one directional antenna 1222 from each of the two anchors 12, 14 is selected for ranging. The measured time of flight are *ToF*₁ *= T*₁*, ToF*₂ = *T*₂, respectively. Based on the following formula, the distance between the wireless communication device and each directional antenna can be calculated: *dᵢ = ToFᵢ × c,* where *dᵢ* is the distance between the wireless communication device and the i-th directional antenna, *ToFᵢ* means time of flight, which is the signal travel time from the wireless communication device to the i-th directional antenna, *c* is the speed of electromagnetic wave propagation (approximately 3 x 10⁸ m/s in free space).

Assume the signal source is located at (*X,Y*), and the positions of the two directional antennas are known as (*x*_{*A*2}*, y*_{*A*2}) and (*x*_{*B*2}*, y*_{*B*2}). Based on ToF calculations, the distances between the wireless communication device and these two directional antennas are *d*₁ and *d*₂, respectively. The following two equations can be established to determine the coordinates of the wireless communication device:
${\left(X-{x}_{A 2}\right)}^{2} + {\left(Y-{y}_{A 2}\right)}^{2} = {{d}_{1}}^{2} ; {\left(X-{x}_{B 2}\right)}^{2} + {\left(Y-{y}_{B 2}\right)}^{2} = {{d}_{2}}^{2} .$

By solving these equations using algebraic computation, the coordinates (*X,Y*) of the wireless communication device can be determined. As shown in positions A and A' of FIG. 11.

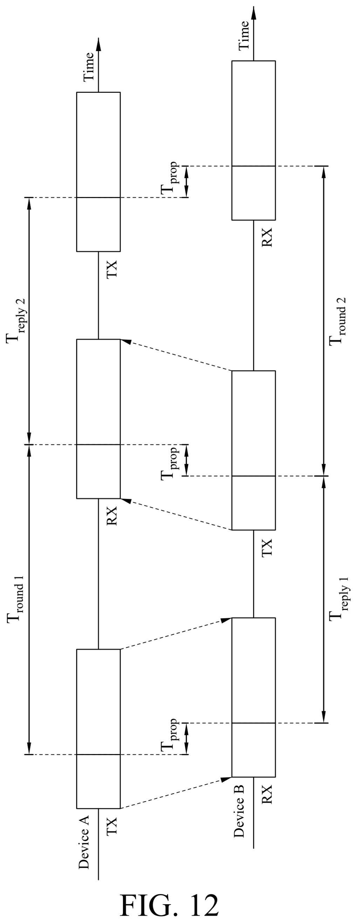

The above-mentioned ToF ranging can be implemented using the Double-Sided Two-Way Ranging (DS-TWR) method, but is not limited to this ToF calculation approach. By using the DS-TWR for two-way signal exchange, the impact of clock drift on distance measurement can be reduced, thereby further improving ranging accuracy. For example, as shown in FIG. 12, the time of flight of signal between a Device A and a Device B can be estimated, and a formula can be used to estimate the distance between the devices as follows:
${T}_{prop} = \frac{\left({T}_{round 1}\times {T}_{round 2}-{T}_{reply 1}\times {T}_{reply 2}\right)}{\left({T}_{round 1}+{T}_{round 2}+{T}_{reply 1}+{T}_{reply 2}\right)}$

Where *Tₚᵣₒₚ* is the signal propagation time, used to estimate the distance between the devices; *T*_{*round*1} is the time taken for the Device A to send a signal to the Device B and receive a response, representing the first round-trip measurement time; *T*_{*round*2} is the time taken for the Device B to send a signal to the Device A and receive a response, representing the second round-trip measurement time; *T*_{*reply*1} is the processing and response time required by the Device B after receiving the signal from the Device A; *T*_{*reply*2} is the processing and response time required by the Device A after receiving the signal from the Device B. It should be noted that the one of the Device A and the Device B can be the wireless communication device, the other one of the Device A and the Device B can be the directional antenna.

At block S103, the localization method includes making a position determination using an antenna array having the directional antennas.

Due to the geometric characteristics of ToF, two possible positions solutions may arise, making it impossible to determine a unique true position based solely on two-point ToF ranging. To resolve the ambiguity in position determination, the present application employs the Directional antenna technology for orientation identification. The directional antennas possess directional gain characteristics, and their Received Signal Strength Indicator (RSSI) along with the antenna's Radiation Pattern can be used to further distinguish between the two possible positions.

In at least one embodiment, the specific method can be multi-antenna signal strength analysis (RSSI-based discrimination). Since the directional antenna array covers different orientations, each directional antenna exhibits varying received signal strengths for signals coming from different directions. By comparing the RSSI values received by each directional antenna, the processor 128 (as shown in FIG. 2) can infer the direction of the wireless communication device based on signal attenuation characteristics and directional gain. In this case, the analysis is further carried out by comparing the RSSI values received by six directional antennas from the wireless communication device. For example: the first anchor 12 includes three directional antennas *A*₁*, A*₂*, A*₃*,* the second anchor 14 includes three directional antennas *B*₁*, B*₂*, B*₃; Antenna *A*₁ RSSI = *a*₁ dBm; Antenna *A*₂ RSSI = *a*₂ dBm; Antenna *A*₃ RSSI = *a*₃ dBm; Antenna *B*₁ RSSI = *b*₁ dBm; Antenna *B*₂ RSSI = *b*₂ dBm; Antenna *B*₃ RSSI = *b*₃ dBm; where the dBm of *a*₂, *b*₂ *> a*₁*, a*₃*, b*₁*, b*₃*.*

At block S104, the localization method includes obtaining a final position of the wireless communication device through the comparison.

In at least one embodiment, the magnitude of the RSSI values from each directional antenna reflects the likelihood of the wireless communication device being located in the direction of that directional antenna's radiation pattern. A higher RSSI value indicates a greater probability that the wireless communication device is positioned in the direction the directional antenna is pointing toward.

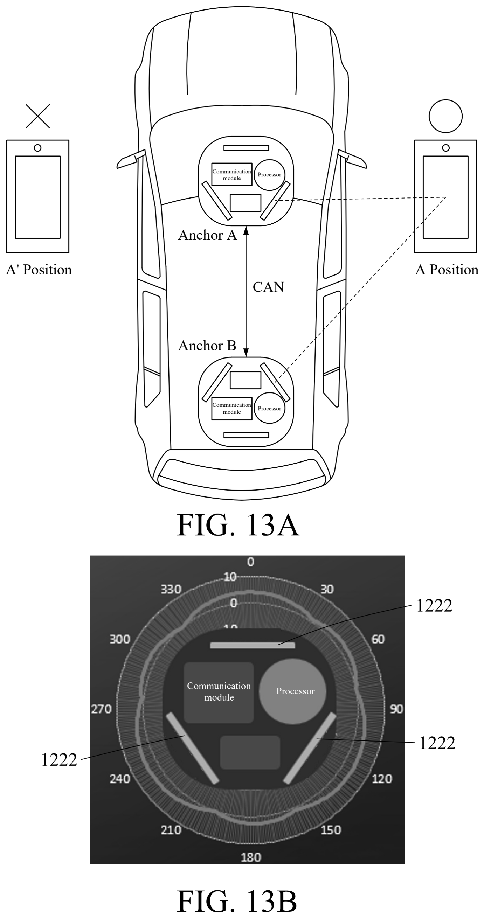

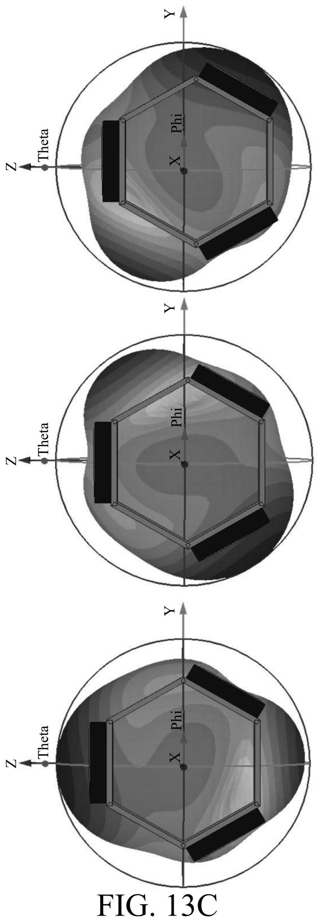

For example, as shown in FIGS. 11, 13A, 13B, and 13C, by comparing these values, if the antennas *A*₂ (RSSI = *a*₂ dBm) and *B*₂ (RSSI = *b*₂ dBm) have higher RSSI values than antennas *A*₁*, A*₃*, B*₁, and *B*₃ (RSSI = *a*₁, *a*₃*, b*₁*, b*₃ dBm), the wireless communication device located at position A can be determined, rather than position A' as shown in FIGS. 11, 13A, 13B, and 13C.

In addition to the above exemplary method, the following another exemplary method can also be applied, incorporating weighting coefficients to achieve a more accurate position determination of the wireless communication device.

In the block S103, the analysis of the "Multi-Antenna Signal Strength Analysis (RSSI-Based Discrimination)" can be replaced by the "Majority Voting and Weighted Estimation", the detail is as follows: by cross-comparing the RSSI values measured from multiple antennas, a majority voting mechanism can be used to determine the more probable true position; accuracy can be further improved through weighted calculations (e.g., assigning higher weights to the antennas with stronger or more stable signal strength). For example, for the first anchor 12 (Anchor A), Antenna *A*₁ *: RSSI*_{*A*1}*,* Antenna *A*₂ : *RSSI*_{*A*2}*,* Antenna *A*₃ : *RSSI*_{*A*3}; for the second anchor 14 (Anchor B), Antenna *B*₁ *: RSSI*_{*B*1}*,* Antenna *B*₂ : *RSSI*_{*B*2}*,* Antenna *B*₃ *: RSSI*_{*B*3}*.* A formula can be used as follows:
${W}_{j} = {\sum }_{i = 1}^{N} {RSSI}_{j , i} ⋅ {w}_{i}$

Where *Pⱼ* is a candidate position, *RSSI_{j,i}* is the RSSI value received by the antenna *i* from the candidate position *Pⱼ, Wⱼ* is the weighted score for the candidate position *Pⱼ, wᵢ* is the weight of the antenna *i* which can be adjusted based on signal stability or other factors.

For example, if the antenna *A*₁ of Anchor A (*RSSI*_{*A*1}) receives a stronger and more stable signal, a higher weight *w*_{*A*1} can be assigned to it. As a result, the weighted score *Wⱼ* will be more biased toward that position. After performing majority voting and weighted evaluation, the most likely candidate position is selected as the final estimated position of the wireless communication device.

In at least one embodiment, the localization method may further include predicting a target angular region based on historical detection angles and prioritizing activation of a specific directional antenna array corresponding to the predicted target angular region. Since the antenna switch 124 can sequentially activate the plurality of directional antennas 1222 within a predetermined time interval, the processor 128 can record historical detection angles of the wireless communication device 20 over a plurality of switching cycles by the antenna switch 124, the processor 128 can further predict the target angular region where the wireless communication device 20 is to be located by processing the historical detection angles through a predetermined prediction algorithm, and prioritize activation of a specific directional antenna array 122 that corresponds to the predicted target angular region to reduce antenna switching latency and optimize localization response time.

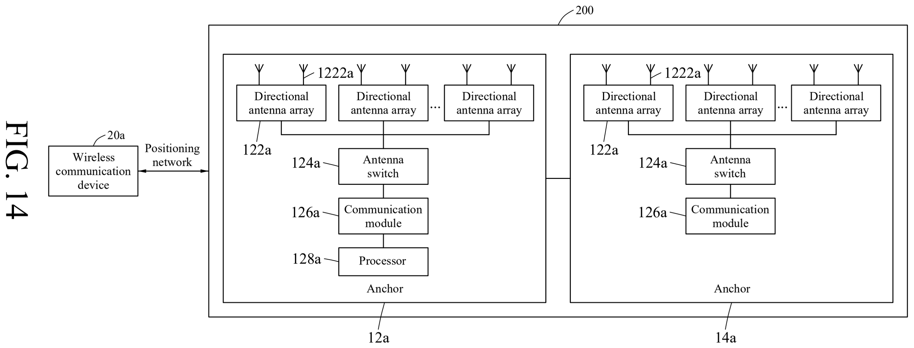

FIG. 14 illustrates a block diagram of a localization system 200 for localizing a wireless communication device of a vehicle according to another embodiment of the present application. Especially, the proposed block diagram is designed for in-vehicle applications.

Referring to FIGS. 3 and 14, the localization system 200 can be arranged in the vehicle 10 and communicated with at least one wireless communication device 20a. The vehicle 10 and the wireless communication device 20a can wirelessly communicate with each other through a positioning network. In at least one embodiment, the wireless communication device 20a can be a digital key for the vehicle 10, which can start and stop the engine of the vehicle 10, lock and unlock the doors of the vehicle 10, and functions of proximity detection.

The localization system 200 includes at least two anchors. In at least one embodiment, the localization system 200 includes a first anchor 12a and a second anchor 14a. The number of anchors can be from 1 to I, where I is a positive integer. The block diagram illustrates one example of two anchors positioned in the vehicle 10 in this application. Each of the first anchor 12a and the second anchor 14a includes a plurality of directional antenna arrays 122a, an antenna switch 124a, and a communication module 126a. For one of the first anchor 12a and the second anchor 14a, further including a processor 128a, which is not limited to this. In another embodiment, neither the first anchor 12a nor the second anchor 14a includes the processor 128a, both the first anchor 12a and the second anchor 14a can communicate with a processor (such as a Microcontroller unit, MCU) arranged in the vehicle 10. For description, the first anchor 12a and the second anchor 14a can also be named as Anchor 1 and Anchor 2 hereinafter.

Each of the first anchor 12a and the second anchor 14a includes N directional antenna arrays 122a, wherein 2 ≤ N *≤ Nₘₐₓ,* depending on the specific application requirements, *Nₘₐₓ* is the maximum number of the directional antenna arrays 122a. In at least one embodiment, each of the first anchor 12a and the second anchor 14a, including three directional antenna arrays 122a. Each directional antenna array 122a includes at least two directional antennas 1222a, configured to directionally transmit and receive wireless signals. In the embodiment, FIG. 14 illustrates two directional antennas 1222a positioned in each directional antenna array 122a.

The plurality of directional antenna arrays 122a, cooperating with the antenna switch 124a, are capable of rapid switching and operation within extremely short time intervals, thereby achieving a radiation pattern distribution similar to that of an omnidirectional antenna.

The communication module 126a is configured to communicate with other anchor(s) and the wireless communication device 20a. In at least one embodiment, the communication module 126a can be, but is not limited to an UWB module, which can operate in a positioning network, such as Ultra-Wideband (UWB) network. The processor 128a is configured to control the UWB module 126a, the antenna switch 124a, and the directional antenna arrays 122a, and process the data and information of the directional antenna arrays 122a. In at least one embodiment, the processor 128a is further configured to process the data and information of the directional antenna arrays 122a of the other anchor(s) through receiving the data and information by the communication module 126a, so that the first anchor 12a and the second anchor 14a can share the processor 128a arranged in one of the first anchor 12a and the second anchor 14a. In at least one embodiment, the processor 128a is configured to perform predetermined algorithms for localizing the wireless communication device 20a, such as performing an Angle of Arrival (AoA) algorithm to calculate a signal incident direction of the wireless communication device 20a using the data and information of the plurality of directional antenna arrays 122a.

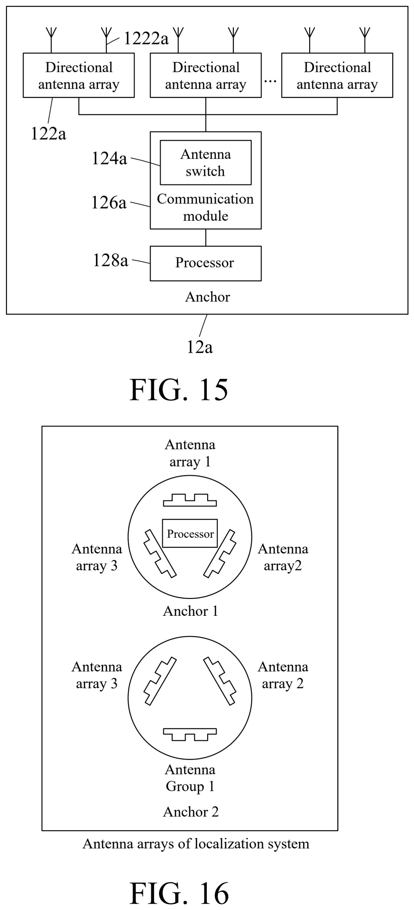

In another embodiment, referring to FIG. 15, the antenna switch 124a can be integrated into the communication module 126a, or the communication module 126a provides a switching function for switching the plurality of directional antenna arrays 122a.

FIG. 16 illustrates an embodiment of the plurality of directional antenna arrays 122a arranged in a triangular configuration. The plurality of directional antenna arrays 122a face different directions according to the triangular configuration, and each of the directional antenna arrays 122a has a predetermined signal coverage range *θ_{range} =* [-*θₘₐₓ*, + *θₘₐₓ*]*,* wherein *θₘₐₓ* is the maximum detecting angle for each of the directional antenna arrays 122a. To achieve complete 360° coverage, the arrangement angle of the N directional antenna arrays 122a will be adjusted according to the number N. The arrangement angle *θ_{spacing}* can be calculated using the following formula: ${θ}_{spacing} = \frac{360 °}{N}$. As the value of N changes, the arrangement angle between the directional antenna arrays 122a will be dynamically adjusted. In a case that N = *N*₃, which means there are three directional antenna arrays 122a, the arrangement angle between every two adjacent directional antenna arrays 122a is ${θ}_{spacing} = \frac{360 °}{{N}_{3}}$. In a case that N = *N*₄, which means there are four directional antenna arrays 122a, the arrangement angle between every two adjacent directional antenna arrays 122a is ${θ}_{spacing} = \frac{360 °}{{N}_{4}}$. Such arrangements ensure 360° coverage regardless of changes in the number of the directional antenna arrays *1*22a.

The antenna switch 124a can be configured to switch the plurality of directional antenna arrays 122a for localizing the wireless communication device 20a. An antenna switching frequency *f_{switch}* is a time interval at which the antenna switch 124a selects different directional antenna arrays 122a for localizing. The antenna switching frequency *f_{switch}* can be set according to system requirements, for example, *f =* 100ms means that the antenna switch 124a switches the directional antenna arrays 122a configuration every 100 milliseconds.

Each of the plurality of directional antenna arrays 122a includes at least two directional antennas 1222a, when the wireless communication device 20a (object to be detected) emits transmitting (Tx) signal, the at least two directional antennas 1222a of each directional antenna array 122a synchronously receive the Tx signal emitted by the wireless communication device 20a, a phase difference (PDoA) will be generated when the Tx signal reaches the at least two directional antennas 1222a, the processor 128a is configured to determine the phase difference. The processor 128a is further configured to calculate an AoA (Angle of Arrival) according to the PDoA, a wavelength of the Tx signal (related to the channel frequency) and a distance between the at least two directional antennas 1222a.

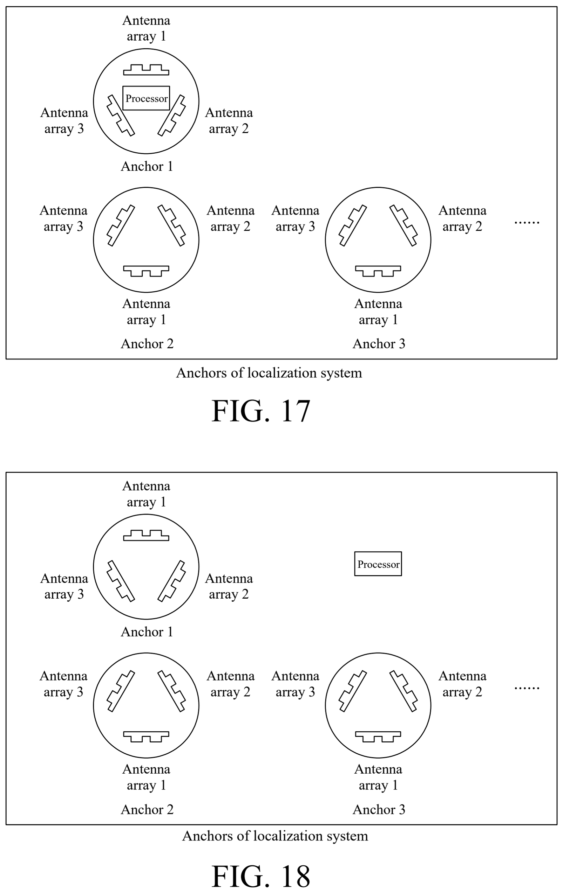

FIGS. 17 and 18 illustrate two arrangements of a plurality of anchors according to other embodiments of the present disclosure. FIG. 17 illustrates the plurality of anchors with one of the anchors including the processor 128a, while other anchors transmitting the signal and information received by the at least two directional antennas 1222a to the processor 128a for calculating the AoA. FIG. 18 illustrates the processor 128a is separately arranged in the vehicle 10 (as shown in FIG. 3), the plurality of anchors do not include the processor 128a, all the anchors transmit the signal and information received by the at least two directional antennas 1222a to the processor 128a for calculating the AoA.

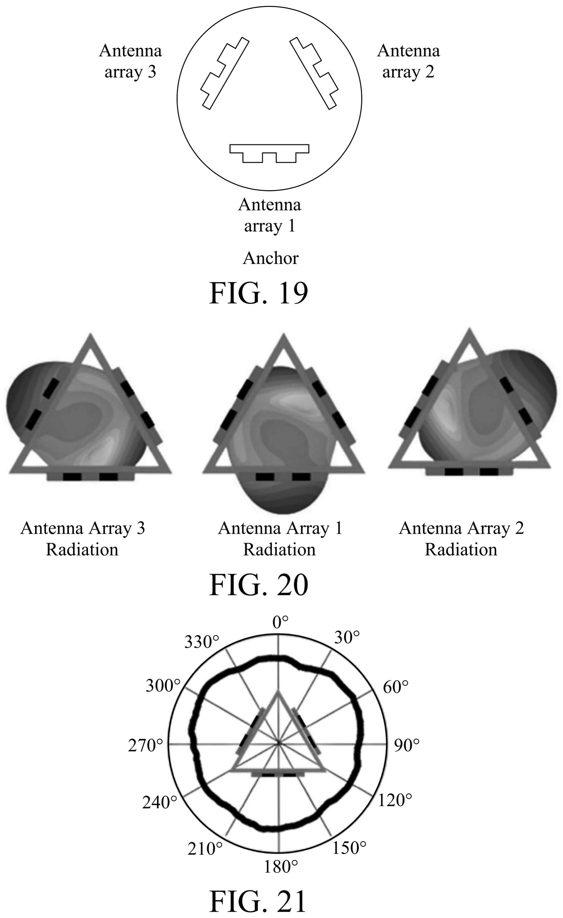

FIG. 19 illustrates an embodiment of the anchor using three directional antenna arrays (N=3) arranged in a triangular (M=3) configuration. In some embodiments, the three directional antenna arrays 122a can be named as antenna array 1, antenna array 2, and antenna array 3. As shown in FIG. 19, the antenna array 1 is arranged in the bottom position of the triangular configuration, the antenna array 2 is arranged in the upper right position of the triangular configuration, and the antenna array 3 is arranged in the upper left position of the triangular configuration.

In some embodiments, a signal coverage range of the antenna array 1 is [-*θₘₐₓ,* + *θₘₐₓ*], corresponding to an angle region Area 1, a signal coverage range of the antenna array 2 is [-*θₘₐₓ*, + *θₘₐₓ*]*,* corresponding to an angle region Area 2, and a signal coverage range of the antenna array 3 is [-*θₘₐₓ*, + *θₘₐₓ*]*,* corresponding to an angle region Area 3. These three angle areas, Areas 1-3, together form a circular area centered on the Anchor, ensuring 360° omnidirectional coverage of the surrounding area. With this configuration, the localization system can effectively perform blind-spot-free localizing around the vehicle.

FIG. 20 illustrates an embodiment of directional radiation pattern according to the directional antenna arrays arranged in the triangular configuration as shown in FIG. 19, in which each directional antenna of the directional antenna arrays has transmitting radiation (Tx) and receiving radiation (Rx) functions. During the radiation period, each directional antenna of the directional antenna arrays will alternately do transmitting radiation (Tx) and receiving radiation (Rx) to generate a specific directional radiation pattern as shown in FIG. 19.

FIG. 21 illustrates an embodiment of a combined radiation pattern of the directional antenna arrays including transmitting radiation (Tx) or receiving radiation (Rx) according to FIG. 20, in which, each directional antenna of the directional antenna arrays (Rx or Tx) is quickly switched at an extremely short time interval (such as 100 milliseconds or shorter), so that each directional antenna pattern in the original directional antenna arrays forms an effect similar to an omnidirectional antenna array by quickly switching at an extremely short time interval. FIG. 21 can be a combined radiation pattern of a transmitting antenna array (Tx) or a receiving antenna array (Rx).

In some embodiments, due to the vehicle 10 (as shown in FIG. 3) itself may cause obstruction or interference, preventing some directional antennas 1222a from fully receiving target signals, this system employs a dual-anchor configuration to overcome this issue. Specifically, two anchors (the first anchor 12a and the second anchor 14a) are configured, each provided with three directional antenna arrays 122a. This design effectively ensures that when one anchor fails to detect the target, the other anchor can still provide localizing services, guaranteeing the system's high availability and stability.

In some embodiments, a localization method of the localization system 200 for localizing a wireless communication device of a vehicle can include following steps:

At step S01, the localization method includes emitting a signal by the wireless communication device.

In some embodiments, the wireless communication device 20a (object to be localized) emits a radio signal, the signal can be a continuous wave, a short pulse, or a specific data packet.

At step S02, the localization method includes acquiring the signals and determining a distance by the anchors.

The anchors (e.g. the first anchor 12a and the second anchor 14a) simultaneously acquire the signal emitted by the wireless communication device 20a (object to be localized). Each anchor uses Time of Flight (TOF) technology to measure a propagation time of the signal. The signal emitted by the wireless communication device 20a travels to the anchor at a known speed (e.g., the speed of light or the speed of electromagnetic waves in air). The anchor determines the time delay it takes for the signal to travel from the wireless communication device 20a to the anchor to calculate the distance. In some embodiments, the first anchor 12a determines a distance *D*₁ of the signal travelling from the wireless communication device 20a to the first anchor 12a; the second anchor 14a determines a distance *D*₂ of the signal travelling from the wireless communication device 20a to the second anchor 14a.

At step S03, the localization method includes determining a phase difference and estimating an angle.

When the signal reaches the two directional antennas 1222a on each of the three directional antenna arrays 122a of the first anchor 12a, the arrival time of the signal at each directional antenna 1222a will differ slightly due to the directional antennas 1222a slightly different spatial positions, resulting in a small phase difference. The same phenomenon occurs at the second anchor 14a.

Taking a simple linear antenna array as an example, if the signal arrives perpendicular to the directional antenna array 122a, all directional antennas 1222a will have the same phase. If the signal arrives at an angle, the wavefront will first reach one of the directional antennas 1222a, then the others in sequence, forming a measurable phase difference gradient. The processor 128a inside the anchor precisely measures the phase difference between the received signals at each directional antenna 1222a in the directional antenna array 122a. The processor 128a inside the anchor uses the determined phase difference to run an AOA estimation algorithm. In some embodiments, the first anchor 12a estimates an angle *α*₁ of the signal from the wireless communication device 20a to the first anchor 12a; the second anchor 14a estimates an angle *α*₂ of the signal from the wireless communication device 20a to the second anchor 14a.

At step S04, the localization method includes calculating localization.

The position on the X-Y plane, Y-Z plane, or Z-X plane is calculated using the localizing method described below. After obtaining the distance between each anchor and the wireless communication device 20a, and the incident angle of each anchor in Steps S02 and S03, the system uses this information to calculate the position of the wireless communication device 20a. Since each anchor can independently calculate the relative position of the wireless communication device 20a, the main function of the two anchors is to cross-verify and minimize vehicle obstruction or interference from affecting the localizing results.

In some embodiments, each anchor calculates localization of the wireless communication device 20a can be performed as follows: assuming the first anchor 12a has coordinates (*X*₁, *Y*₁)*,* and the incident angle of the wireless communication device 20a has been calculated as *α*₁, and the distance as *D*₁ (calculated using Time-of-Flight), the position of the wireless communication device 20a relative to first anchor 12a can be preliminarily estimated using the following formula:
${X}_{ByAnchor 1} = {X}_{1} + {D}_{1} \times cos \left({α}_{1}\right) , {Y}_{ByAnchor 1} = {Y}_{1} + {D}_{1} \times sin \left({α}_{1}\right)$

Thus, the first anchor 12a can be configured to estimate the relative position (*X*_{*ByAnchor*1}, *Y*_{*ByAnchor*1}) of the wireless communication device 20a.

The two anchors can be used to perform cross-validation. To improve the accuracy and reliability of localizing, the localization system will perform cross-validation based on the estimation results of two anchors (the first anchor 12a and the second anchor 14a). Assuming the coordinates of the second anchor 14a are (*X*₂,*Y*₂), and the second anchor 14a has already calculated the incident angle of the wireless communication device 20a as *α*₂ and the distance as *D*₂ (calculated using ToF), then the second anchor 14a can calculate the relative position of the wireless communication device 20a using a similar formula:
${X}_{ByAnchor 2} = {X}_{2} + {D}_{2} \times cos \left({α}_{2}\right) , {Y}_{ByAnchor 2} = {Y}_{2} + {D}_{2} \times sin \left({α}_{2}\right)$

Thus, the second anchor 14a can be configured to estimate the relative position (*X*_{*ByAnchor*2}*, Y*_{*ByAnchor*2}) of the wireless communication device 20a.

In summary, the position of the wireless communication device 20a relative to the first anchor 12a as (*X*_{*ByAnchor*1}*, Y*_{*ByAnchor*1}), and the position of the wireless communication device 20a relative to the second anchor 14a as (*X*_{*ByAnchor*2}*, Y*_{*ByAnchor*2})*.*

The processor 128a is further configured to use a weighted average or optimization process (e.g., using least squares) based on the localizing results of the two anchors to determine the final position (*X_{final}, Y_{final}*) of the wireless communication device 20a. This further improves localizing accuracy and eliminates errors caused by occlusion or interference.

In some embodiments, if one of the anchors fails to detect the signal from the wireless communication device 20a, the remaining anchor can still perform localization calculations independently. In this case, the localization system relies on the remaining anchors for localization, and if only a single anchor is available, it performs independent localization based on the angle and distance data of anchor. This design ensures that the localization system can maintain stable operation even when some anchors fail or are occluded.

When the estimated results (*X*_{*ByAnchor*1}*, Y*_{*ByAnchor*1}) and (*X*_{*ByAnchor*2}*, Y*_{*ByAnchor*2}) of the two anchors are close, the system will determine this result as the final localizing result (*X_{final}, Y_{final}*) and provide high-precision positioning services. If the results of the two anchors deviate significantly, the system will perform error detection according to a preset tolerance and correct the localizing error based on the more reliable anchor result. If one of the anchors fails to detect the target, the localization system will continue to rely on the data of the other anchor for localizing and predict the missing localizing information through a predictive model (such as a machine learning algorithm). When both anchors successfully detect the target (the wireless communication device 20a), the localization system will perform cross-validation to further improve the reliability and accuracy of the localizing.

Using the above method, the (X,Y) localizing position in the X-Y plane is obtained. Then, applying the same method, the (Y,Z) localizing position in the Y-Z plane is obtained. Thus, the three-dimensional (X,Y,Z) position can be obtained. The position on the Y-Z plane or Z-X plane is calculated using the following localizing method. After obtaining the distance between each Anchor and the wireless communication device 20a and the incident angle of each Anchor, the system will use this information to calculate the position of the wireless communication device 20a and combine it with the X-Y plane to obtain the (X,Y,Z) localizing position. For single anchor localizing calculation, assuming the coordinates of the first anchor 12a (Anchor 1) are (*Y*₁, *Z*₁)*,* and the incident angle of the transmitter to the first anchor 12a has been calculated as *α*₂ and the distance as *D*₂ (calculated using ToF), the position of the wireless communication device 20a relative to the first anchor 12a can be initially estimated using the following formula:
${Y}_{ByAnchor 1} = {Y}_{1} + {D}_{2} \times cos \left({α}_{2}\right) , {Z}_{ByAnchor 1} = {Z}_{1} + {D}_{2} \times sin \left({α}_{2}\right)$

Thus, the first anchor 12a can estimate the three-dimensional position of the wireless communication device 20a as (*X*_{*ByAnchor*1}, *Y*_{*ByAnchor*1}, *Z*_{*ByAnchor*1}).

In some embodiments, the directional antenna 1222a has the highest reception strength in the direction of the main wave beam. The localization system can establish a distribution map by using the RSSI values of each antenna direction as an auxiliary basis for direction determination. When the AoA calculations become unstable due to reflections, multipath propagation, or obstruction, the maximum RSSI direction can be used as the basis for backup decision-making. The position and orientation of the directional antennas 1222a can be arranged using a polygonal arrangement. The directional antennas 1222a are arranged in a polygonal pattern, where the number N of polygonal sides is an integer from 3 to N, and the number M of the directional antenna arrays 122a is an integer from 2 to M, as shown in FIGS. 19-21.

By scanning with the plurality of directional antennas 1222a and recording RSSI values in each direction, azimuth determination is performed. Each of the directional antenna arrays 122a has a fixed orientation (120° interval) for sequential reception. The directional antenna arrays 122a record the RSSI value received at the current time point in each direction (e.g., Antenna array 1 = 5 dBm, Antenna array 2 = -3 dBm ...). Plotting the intensity distribution of the RSSI values in each direction. The direction with the greatest intensity is estimated as the target (the wireless communication device 20a) direction, assisting in AoA determination.

For example, the antenna array 1 (0° direction) has an RSSI value of 5 dBm, the antenna array 2 (120° direction) has an RSSI value of -3 dBm, the antenna array 3 (240° direction) has an RSSI value of -6 dBm. Since the signal is strongest in the antenna array 1 region, it can be inferred that the object being detected is located within the antenna array 1 signal region.

In some embodiments, the localization system 200 can predict the possible position of the target (the wireless communication device 20a) based on historical detection angles and prioritize the activation of the corresponding directional antenna array 122a. The localization system 200 can also dynamically adjust the operating time of the directional antenna arrays 122a based on historical records and the frequency of occurrence in a certain angular region. Specifically, if the angular region corresponding to certain directional antenna array 122a occurs more frequently, the localization system 200 will extend the operating time of that directional antenna array 122a. Relationship between the operating time and frequency of the directional antenna array 122a in the angular region: let *Tᵢ*(*n*) be the operating time of directional antenna array *i* in the nth switching cycle, then the formula for the operating time of the directional antenna array 122a can be expressed as:
${T}_{i} \left(n\right) = f \left({P}_{θ}\left(n\right),{H}_{i}\left(n\right)\right)$

Wherein *P_{θ}*(*n*) is the frequency of occurrence in this angular region, *Hᵢ*(*n*)is the historical stability or performance evaluation of the antenna array *i, f* is a function that adjusts the operating time of the directional antenna array based on the angular frequency and historical performance.

During each switching determination, the localization system will select the directional antenna array 122a with the longer operating time and higher prediction reliability. The directional antenna array switching strategy can be selected according to the following formula:
${S}_{switch} = arg max \left({T}_{1}\left(n\right),{T}_{2}\left(n\right),…,{T}_{n}\left(n\right)\right)$

Wherein *S_{switch}* is the selected directional antenna array, and *Tᵢ*(*n*) is the operating time of each directional antenna array, which is determined based on its predicted angular frequency and historical data. Historical detecting angle records can be shown in Table 1:

| Angle | Percentage of appearances | Designated antenna array |
|---|---|---|
| 0° ~ 140° | 5% | Antenna array 1 |
| 141° ~ 280° | 20% | Antenna array 2 |
| 281° ~ 360° | 75% | Antenna array 3 |

As shown in Table 1, assume the localization system 200 has three antenna arrays 1-3, each corresponding to a different angular region. For example, suppose the angular region 281°~360° frequently appears in historical records, and the corresponding antenna array is the antenna array 3. Then, the localization system first inputs the data from Table 1. After processing by a predetermined algorithm (such as an AI model or machine learning), then predicting which antenna array will prioritize switching its position.

If a priority switching strategy is not enabled, the localization system will switch antenna arrays in a fixed order, for example: Antenna array 1 → Antenna array 2 → Antenna array 3 → Antenna array 1 → Antenna array 2 → Antenna array 3 → ...

If the priority switching strategy is enabled, Antenna array 3 will be selected first based on historical predictions, and the switching order may become: Antenna array 3 → Antenna array 1 → Antenna array 2 → Antenna array 3 → Antenna array 1 → Antenna array 2 → ...→ ...

If the angular region of 281°~360° occurs frequently, the localization system will extend the operating time of Antenna array 3 until a new angular prediction occurs that requires switching. For example, the localization system may perform the following switching: Antenna array 3 → Antenna array 3 → Antenna array 3 → Antenna array 2 → Antenna array 2 → Antenna array 1 → ...

This mechanism effectively reduces unnecessary antenna switching, optimizes localizing accuracy, and improves system performance and response speed. Directions with frequent obstruction or noise are given lower priority to avoid resource waste. Machine learning prediction models can be imported for antenna array pre-selection and priority ranking, automatically optimizing antenna scanning strategies. Advantages include reduced switching latency, reduced computational burden, and improved efficiency and faster response time.

When analyzing AoA and RSSI data, the localization system imports a difference analysis module to determine the reliability of the signal source. That is, if the RSSI or AoA value of a certain antenna array differs greatly from its corresponding median (RSSI or AoA value), it is determined to be a reflected signal (NLoS) and is filtered out. This algorithm possesses dynamic parameter learning capabilities, continuously optimizing filtering conditions and strategies based on ambient reflections and occlusion. For multipath or interference/occlusion problem, the Extended Kalman Filter (EKF) algorithm is applied to filter errors caused by reflected signals, improving localizing accuracy. A plurality of anchor reception angles can be cross-referenced; if the directions are inconsistent, the credibility of that anchor is reduced or excluded.

Each anchor uses its directional antenna array to measure the phase difference of the signal and calculates the angle of incidence (AoA) based on these phase differences. This process helps to determine the relative angle of the wireless communication device 20a. The anchors determine the position of the wireless communication device 20a based on signal strength (RSSI values) in different directions. These strength values help to determine the position of the wireless communication device 20a within a specific angular region, thus aiding in AoA localizing. The localization system compares the received AoA and RSSI values with the median. If the difference between the received values and the median is large, the data will not be included in the localizing calculation. The data will be marked as a non-line-of-sight (NLoS) signal and then filtered by EKF. Possible NLoS signals are input to a multi-sensor fusion filter (e.g., EKF). After the NLoS signals are filtered out, the values remaining are used for the final localizing calculation. The final localizing value is calculated using the aforementioned AoA localizing to determine the localizing position (*X_{final}, Y_{final}, Z_{final}*).

In some embodiments, all received data of the directional antenna arrays 122a is accompanied by a precise timestamp to ensure data synchronization from different Anchors.

In some embodiments, through the localizing positions (*X_{final_n}, Y_{final_n}, Z_{final_n}*) of the anchors or the directional antenna arrays can be obtained, wherein *final_n* is an integer representing the number of the anchors or directional antenna arrays. It is weighted according to any combination of factors such as distance, movement speed, signal strength, occlusion, or reflection, and the weights of the localizing positions of the anchors or directional antenna arrays are dynamically adjusted to optimize localizing accuracy. For instance, the positions of the object (the wireless communication device 20a) being detected by the anchors or directional antenna arrays can be as follows:
$Anchor 1 / Antenna array 1 : \left({X}_{final _ 1}, {Y}_{fianl _ 1}, {Z}_{final _ 1}\right) ,$
$Anchor 2 / Antenna array 2 : \left({X}_{final _ 2}, {Y}_{fianl _ 2}, {Z}_{final _ 2}\right) .$

When the object (the wireless communication device 20a) being detected is close to Anchor 1, the localization data of that Anchor will be given higher weight because closer Anchors are more reliable and less affected by Multipath. For example:
$Anchor 1 / Antenna array 1 : \left({X}_{final _ 1}, {Y}_{fianl _ 1}, {Z}_{final _ 1}\right) x 70 % ,$
$Anchor 2 / Antenna array 2 : \left({X}_{final _ 2}, {Y}_{fianl _ 2}, {Z}_{final _ 2}\right) x 30 % .$

When the object (the wireless communication device 20a) being detected is moving at high speed, the weights are concentrated on the closer anchors because closer anchors can shorten the response time to rapidly changing signals at this time, and the signals from each anchor change rapidly, and the localizing error will accumulate as the object being detected moves quickly, at this time, the more distant anchors are more susceptible to the effects of multipath or signal attenuation, resulting in a larger overall cumulative error value.

When the object (the wireless communication device 20a) being detected is stationary or moving slowly, the weights are concentrated on the more distant anchors because the signal changes are relatively stable and predictable, so the data from these distant anchors will be more stable and change less, making the localizing data more reliable.

The RSSI values detected by each antenna array in all anchors are compared, i.e., antenna arrays 1-3 in Anchor 1 and antenna arrays 1-3 in Anchor 2. The antenna array with the higher RSSI value has a higher confidence in the azimuth, and the localizing calculation weight of the antenna array with the higher RSSI value in the anchor is increased.

For each antenna array in all anchors, namely antenna arrays 1-3 in Anchor 1 and antenna arrays 1-3 in Anchor 2, if the RSSI or AOA values obtained by a certain antenna array differ too much from the median or average value, it is determined that the antenna array is located in a shielded or reflective area, and its weight will be dynamically reduced.

In the present disclosure, the localization system dynamically weights the AoA and RSSI data from two anchors (Anchor 1 and Anchor 2), where the antenna arrays 1-3 of the Anchor 1 or the antenna arrays 1-3 of the Anchor 2 are used for detection. The localization system adjusts the localizing weight of each anchor or antenna array's data in real time based on the reliability of the data provided by each anchor or antenna array.

In some embodiments, the two anchors (the anchor 1 and the anchor 2) synchronously receive the signal emitted by the wireless communication device 20a, estimate AoA according to the phase difference and auxiliary determine the position of the wireless communication device 20a according to the analyzed RSSI data. The calculated angle and distance data accompanied by precise timestamps can be transmitted to the main anchor.

In position dynamic weight calculation, the anchors or antenna arrays store recent data (angle and distance) for movement speed and variation analysis to achieve historical data management. Calculating the weight of each anchor or antenna array's current data is based on the following four factors: a distance factor (*W_{D}*)*,* a movement speed factor (*W_{M}*)*,* a signal strength factor (*W_{S}*)*,* and a shading condition factor (*Wₒ*)*.* For the distance factor (*W_{D}*)*,* the closer the anchors or antenna arrays are to the wireless communication device 20a, the higher the reliability of the localization is; based on the calculated distances *D*₁ and *D*₂, the weights can be adjusted by using an inverse proportional function: ${W}_{D} ∝ \frac{1}{D}$. For the movement speed factor (*W_{M}*)*,* the weights are adjusted based on the movement speed of the wireless communication device 20a; if the wireless communication device 20a moves rapidly, data from closer anchors or antenna arrays will be more reliable; conversely, if the wireless communication device 20a is stationary or moving slowly, data from farther anchors or antenna arrays may be more stable. For the signal strength factor (*W_{S}*)*,* the RSSI values of both anchors and antenna arrays can be used to determine the angular region where the wireless communication device 20a is located; the weights are adjusted based on the detected RSSI values; the stronger the signal is, the higher the weight is. For the shading condition factor (*Wₒ*), if the anchor is located in an occlusion area, its signal may undergo non-line-of-sight (NLoS) propagation, reducing data reliability; based on the relative positions of the environment map and the anchors and targets, assess the occlusion impact and adjust the weights. Thus, all the weight factors are calculated together, for example: *W_{Anchor} = F*(*W_{D}, W_{M}, W_{S}, W_{O}*)*,* wherein F is the weight calculation function, which may include weighted average or product.

In data filtering and localization, unreliable data is filtered out based on the weight score of each anchor and antenna array, if the data of a certain anchor or antenna array shows obvious occlusion or reflection effects, the data of that anchor or antenna array will be filtered out, so as to filtering unreliable data. The data of each anchor and antenna array is weighted according to dynamic weight adjustment. The filtered data will have lower weights, while data with higher weights will have a greater impact on the final localization result, so as to achieve weighted adjustment calculation.

In final position calculations, after being weighted and filtered, the data is transmitted to the localizing calculation module for optimal position estimation, and finally the precise position of the wireless communication device 20a is output.

The embodiments shown and described above are only examples. Even though numerous characteristics and advantages of the present technology have been set forth in the foregoing description, together with details of the structure and function of the present disclosure, the disclosure is illustrative only, and changes may be made in the detail, including in matters of shape, size and arrangement of the parts within the principles of the present disclosure, up to and including the full extent established by the broad general meaning of the terms used in the claims.

## Claims

1. A localization system (100, 200) for localizing a wireless communication device (20, 20a) of a vehicle (10), the localization system (100, 200) comprising:
at least two anchors (12, 14, 12a, 14a) respectively arranged at different positions of the vehicle (10), each of the at least two anchors (12, 14, 12a, 14a) comprising a plurality of directional antennas (1222, 1222a) arranged in a predetermined polygonal configuration; wherein the plurality of directional antennas (1222, 1222a) of the at least two anchors (12, 14, 12a, 14a) are configured to radiate and receive signals over 360 degrees and localize the wireless communication device (20, 20a) of the vehicle (10); and
a processor (128, 128a) configured to:
receive the signals from the wireless communication device (20, 20a) via at least one directional antenna (1222, 1222a) of the plurality of directional antennas (1222, 1222a);
determine a distance between the at least one directional antenna (1222, 1222a) of the plurality of directional antennas (1222, 1222a) and the wireless communication device (20, 20a); and
calculate a position of the wireless communication device (20, 20a) based on the determined distance.

2. The localization system (100, 200) according to claim 1, wherein a number of polygonal sides of the predetermined polygonal configuration is at least three, a number of the plurality of directional antennas (1222, 1222a) arranged in the predetermined polygonal configuration is at least two.

3. The localization system (100, 200) according to claim 1, further comprising:
an antenna switch (124, 124a) coupled to the plurality of directional antennas (1222, 1222a) and configured to sequentially activate the plurality of directional antennas (1222, 1222a) within a predetermined time interval to emulate an omnidirectional radiation pattern.

4. The localization system (100, 200) according to claim 1, wherein each anchor (12, 14, 12a, 14a) of the at least two anchors (12, 14, 12a, 14a) comprises three directional antennas (1222, 1222a), the three directional antennas (1222, 1222a) are arranged in a triangular configuration.

5. The localization system (100, 200) according to claim 1, wherein at least two directional antennas (1222, 1222a) of the plurality of directional antennas (1222, 1222a) are configured to measure a phase difference between the at least two directional antennas (1222, 1222a) and the wireless communication device (20, 20a).

6. The localization system (100, 200) according to claim 1, wherein each anchor (12, 14, 12a, 14a) of the at least two anchors (12, 14, 12a, 14a) comprises four directional antennas (1222, 1222a), and the four directional antennas (1222, 1222a) are arranged in a quadrilateral configuration.

7. The localization system (100, 200) according to claim 1, wherein each anchor (12, 14, 12a, 14a) of the at least two anchors (12, 14, 12a, 14a) comprises three directional antennas (1222, 1222a), and the three directional antennas (1222, 1222a) are arranged in a hexagonal configuration offset from one another by a side of a hexagon.

8. The localization system (100, 200) of claim 1, wherein the processor (128, 128a) is further configured to predict a target angular region based on historical detection angles and to prioritize activation of a specific directional antenna array (122, 122a) corresponding to the predicted target angular region.

9. The localization system (100, 200) according to claim 1, wherein the at least two anchors (12, 14, 12a, 14a) are configured to be symmetrically positioned along a center axis of the vehicle (10) and positioned in a front-to-rear opposing arrangement.

10. The localization system (100, 200) according to claim 1, wherein the at least two anchors (12, 14, 12a, 14a) are configured to be positioned at corners of the vehicle (10).

11. A localization method for localizing a wireless communication device (20, 20a) of a vehicle (10), the localization method comprising:
providing the localization system (100, 200) according to any one of claims 1 to 10;
receiving the signals from the wireless communication device (20, 20a) via at least one directional antenna (1222, 1222a) of the plurality of directional antennas (1222, 1222a);
determining a distance between the at least one directional antenna (1222, 1222a) of the plurality of directional antennas (1222, 1222a) and the wireless communication device (20, 20a); and
calculating a position of the wireless communication device (20, 20a) based on the determined distance.

12. The localization method according to claim 11, wherein the step of determining the distance between the at least one directional antenna (1222, 1222a) of the plurality of directional antennas (1222, 1222a) and the wireless communication device (20, 20a) by the at least one directional antenna (1222, 1222a), comprises:
measuring a time of flight of the signal between the at least one directional antenna (1222, 1222a) and the wireless communication device (20, 20a); and
calculating the distance between the at least one directional antenna (1222, 1222a) and the wireless communication device (20, 20a) according to the measured time of flight and a speed of electromagnetic wave propagation.

13. The localization method according to claim 12, wherein the step of measuring the time of flight of the signal between the at least one directional antenna (1222, 1222a) and the wireless communication device (20, 20a) comprises:
detecting a time taken for the at least one directional antenna (1222, 1222a) to transmit a signal to the wireless communication device (20, 20a) and receive a response, representing a first round-trip measurement time;
detecting a time taken for the wireless communication device (20, 20a) to transmit a signal to the at least one directional antenna (1222, 1222a) and receive a response, representing a second round-trip measurement time;
obtaining a first processing and response time required by the wireless communication device (20, 20a) after receiving the signal from the at least one directional antenna (1222, 1222a);
obtaining a second processing and response time required by the at least one directional antenna (1222, 1222a) after receiving the signal from the wireless communication device (20, 20a); and
calculating the time of flight of the signal between the at least one directional antenna (1222, 1222a) and the wireless communication device (20, 20a) based on the first round-trip measurement time, the second round-trip measurement time, the first processing and response time, and the second processing and response time.

14. The localization method according to claim 12, wherein the step of detecting the distance between the at least one directional antenna (1222, 1222a) and the wireless communication device (20, 20a) by the at least one directional antenna (1222, 1222a), comprises:
determining two coordinates of the wireless communication device (20, 20a) based on the calculated distance between the at least one directional antenna (1222, 1222a) and the wireless communication device (20, 20a) and coordinates of the at least one directional antenna (1222, 1222a).

15. The localization method according to claim 11, wherein the step of calculating the position of the wireless communication device (20, 20a) based on the distance between the at least one directional antenna (1222, 1222a) and the wireless communication device (20, 20a), comprises:
inferring a direction of the wireless communication device (20, 20a) based on signal attenuation characteristics and directional gain by comparing signal strength values received by each directional antenna (1222, 1222a) of the plurality of directional antennas (1222, 1222a); and
selecting a signal strength value that is highest among the received signal strength values to determine the position of the wireless communication device (20, 20a).

16. The localization method according to claim 11, wherein calculating the position of the wireless communication device (20, 20a) based on the distance between the at least one directional antenna (1222, 1222a) and the wireless communication device (20, 20a), comprises:
cross-comparing signal strength values of the plurality of directional antennas (1222, 1222a) of the at least two anchors (12, 14, 12a, 14a); and
performing majority voting and weighted evaluation to select a candidate position having a highest probability as the position of the wireless communication device (20, 20a).

17. The localization method according to claim 11, further comprising:
measuring a phase difference of the signal reaching the plurality of directional antennas (1222, 1222a);
calculating an Angle of Arrival (AoA) of the signal according to the phase difference, a wavelength of the signal, and a distance between the plurality of directional antennas (1222, 1222a); and
calculating the position of the wireless communication device (20, 20a) based on the AOA and the distance between the at least one directional antenna (1222, 1222a) and the wireless communication device (20, 20a).

18. The localization method according to claim 17, further comprising:
comparing signal strength of the electromagnetic signal received by the plurality of directional antennas (1222, 1222a) to determine an azimuth of the wireless communication device (20, 20a) to assist in determining the AOA.

19. The localization method according to claim 18, further comprising:
assigning a weight to each directional antenna (1222, 1222a) of the plurality of directional antennas (1222, 1222a) based on the signal strength, wherein a directional antenna (1222, 1222a) having a signal strength value greater than other directional antennas (1222, 1222a) is assigned a greater weight.

20. The localization method according to claim 11, further comprising:
recording historical detection angles of the wireless communication device (20, 20a) over a plurality of switching cycles;
predicting a target angular region where the wireless communication device (20, 20a) is to be located by processing the historical detection angles through a predetermined prediction algorithm; and
prioritizing activation of a specific directional antenna array (122, 122a) that corresponds to the predicted target angular region to reduce antenna switching latency and optimize localization response time.
